# EUROPEAN PATENT SPECIFICATION

(11) **EP 2 199 836 B1**
(45) Date of publication and mention of the grant of the patent: **24.04.2013**
(21) Application number: 08275087.8
(22) Date of filing: 18.12.2008
(51) Int. Cl.: G02B 26/00, G02B 3/14

(54) **Fluidic lens**
Fluidlinse
Lentille fluidique

(43) Date of publication of application: 23.06.2010
(73) Proprietor: BAE Systems PLC, London SW1Y 5AD (GB)
(72) Inventor: Laycock, Leslie Charles, Chelmsford, Essex, CM2 8HN (GB); Griffith, Michael Stewart, Chelmsford, Essex, CM2 8HN (GB)
(74) Representative: BAE SYSTEMS plc Group IP Department

(56) References cited:
- EP-A- 1 921 471
- JP-A- 1 140 118
- JP-A- 2 178 602
- JP-A- 59 119 301

## Description

This invention relates to fluidic lenses and in particular, but not exclusively, lenses for use with light of wavelength in the visible, near infra-red (IR) and in the range 3-5µm. The term "light" as used herein includes infra-red and ultraviolet as well as visible light.

A variable-focus fluidic lens has been described for example in "Variable-focus liquid lens", H. Ren et al, Optics Express Vol. 15, No. 10, 5931-5936, 14 May 2007. The fluidic lens in that case is based upon a pressure-induced liquid redistribution within a lens cell. In this case the liquid used is pure water, but other fluids could be used. However, because of the influence of gravity, there is a tendency for such lenses to sag if their aperture is increased above a few millimetres. In addition, the simple structure of the lens makes it impossible for it to be achromatic in nature (.i.e. able to focus parallel rays of different wavelengths to the same point)

JP-A-1140118 discloses another fluidic lens according to the prior art.

The invention provides a fluidic lens comprising a cavity containing an optically transparent liquid and bounded by optically transparent walls arranged such that light may pass into the fluid via one said wall and exit from the fluid via another said wall, at least one said wall comprising at least one optically transparent piezoelectric element which is deformable so as to change the shape of the cavity, wherein the at least one optically transparent piezoelectric element is a single crystal piezoelectric element.

The term "liquid" as used herein includes both substances which are permanently liquid at operating temperatures of interest, and substances which are liquid during manufacture of the lens to permit shaping thereof, and which subsequently become solid.

The piezoelectric element may be of monomorph or bimorph construction.

There may be at least one optically transparent electrode for applying an actuating voltage to a said piezoelectric element.

The electrode may be disposed in an optically transparent planarisation layer.

The material of the planarisation layer may have substantially the same refractive index as that of the electrode.

There may be a plurality of electrodes arranged to apply actuating voltages to different areas of the piezoelectric element.

The electrodes may form an array such that each said area of the piezoelectric element has an individually addressable electrode.

The liquid may be conductive and may form an electrode for the piezoelectric element.

The piezoelectric element may be configured to provide plurality of individually deformable sub-elements.

There may be a supporting structure which supports the piezoelectric element at nodes between the sub-elements.

There may be an opening to permit liquid to flow into or out of the cavity when the piezoelectric element is deformed.

The lens may comprise means for maintaining the liquid under pressure.

There may be a pump configured to be driven simultaneously with deformation of the at least one piezoelectric element to assist the flow of liquid.

The pump may be a piezoelectric pump.

The invention also provides a compound lens comprising a plurality of lenses as set forth above, a said wall of one lens also forming a said wall of another lens.

A number of fluidic lenses according to the present invention will now be described in more detail, by way of example only, with reference to the accompanying drawings, in which:
Figures 1 and 2 show cross-sections through two convex/concave variable lenses in various operating configurations;
Figures 3 and 4 show compound or multi-element lenses in various operative configurations;
Figure 5 shows an arrangement of driving electrodes for a fluidic lens;
Figure 6 is a section through part of a fluidic lens
Figure 7 shows another arrangement of driving electrodes.
Figure 8 shows plan and sectional views of another fluidic lens, in various operating configurations,
Figure 9 shows a further arrangement of driving electrodes; and

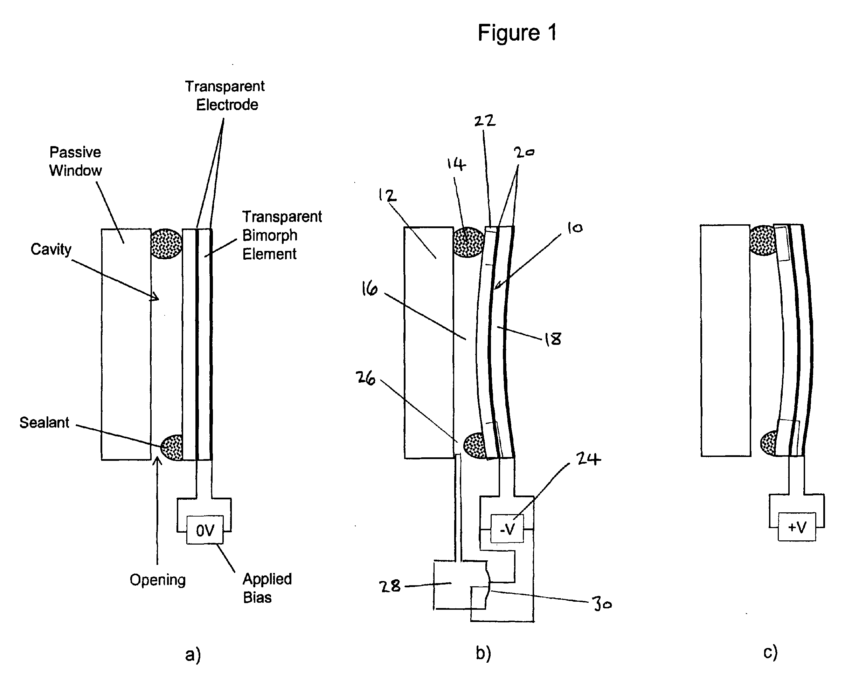

Referring to Figure 1b, a plano-convex-concave fluidic lens assembly comprises an optically-transparent circular active wall or element 10 bonded to a similarly-transparent passive wall or window 12 by a compliant sealant 14. The area inside the sealant constitutes a cavity 16 which allows for the passage of light through the assembly from the active element 10 to the window 12. The circular active element 10 comprises a transparent piezoelectric single crystal element 18 for example of TRS-X2B material from TRS ceramics, with a transparent conductor (e.g. indium tin oxide (ITO)) 20 deposited on each surface and bonded (with an optically clear epoxy) to an optically transparent passive substrate 22.

The ITO is preferably deposited at a low temperature (e.g. < 80°C) to reduce the risk of affecting the structure of the single crystal material. Deposition of suitable films of ITO has been reported at temperatures as low as 50°C (see Kevin Fuchsel et al 'Low Temperature deposition of indium tin oxide films by plasma ion-assisted evaporation', Applied Optics Vol 47, No 13, ppC297-C302. May 2008. The compliant sealant 14 is flexible in order to accommodate the bending of the active element 10 while still acting to contain the fluid, and preferably is of silicone rubber, such as Silcoset 105 from ACC Silicones.

The application of an applied voltage from source 24 across the thickness of the single crystal element using the ITO electrodes 20 results in bending of the active element. This in turn will cause displacement of the fluid within the cavity 16. An aperture 26 in the sealant allows the fluid to flow into or out of the optical cavity 16 in response the displacement induced by the bending of the active element 10. The spare fluid is kept in a reservoir 28. The reservoir is an elastic container or accumulator by means of which the liquid is kept under pressure so that it will flow into as well as out of the cavity 16 when required. The flow of liquid can be assisted and the dynamic response improved by means of a pump which conveniently can be a piezoelectric element 30 in the wall of the reservoir 28. This element is driven in antiphase to the element 10 by the voltage source 24 so as to increase the volume of the reservoir 28 when the volume of the cavity 16 is decreased, and vice-versa.

Figure 1b shows the lens with a negative bias applied to make a plano-concave lens with negative focusing power, while Figure 1c shows the lens assembly with a positive bias applied to make a piano-concave lens with positive focusing power.

As with reflective bimorph deformable mirrors, the higher the positive/negative voltage applied to the piezoelectric element, the greater the curvature and hence the higher the focusing power that is induced.

In Figure 1, the piezoelectric element is on the outside of the structure. However, the invention would also work if the piezoelectric element were on the inside. Then, if the liquid is conductive, it may be possible to utilise the liquid itself as one of the electrodes 20 by exposing the surface of the piezoelectric element 18 to it. A further option is to add a transparent encapsulation layer onto the ITO coating to protect the piezoelectric element. Where it is on the outside, the encapsulation may provide a hard durable surface to improve the environmental ruggedness of the lens. If the piezoelectric element faces the liquid, the encapsulation may help to protect the piezoelectric element from the liquid itself, for example if the liquid used has corrosive properties.

While the active element shown in Figure 1 is a monomorph (i.e. comprising a single layer of poled piezoelectric material), it could equally be a true bimorph or symmetric bimorph structure, with two oppositely-poled piezoelectric layers arranged back-to-back.

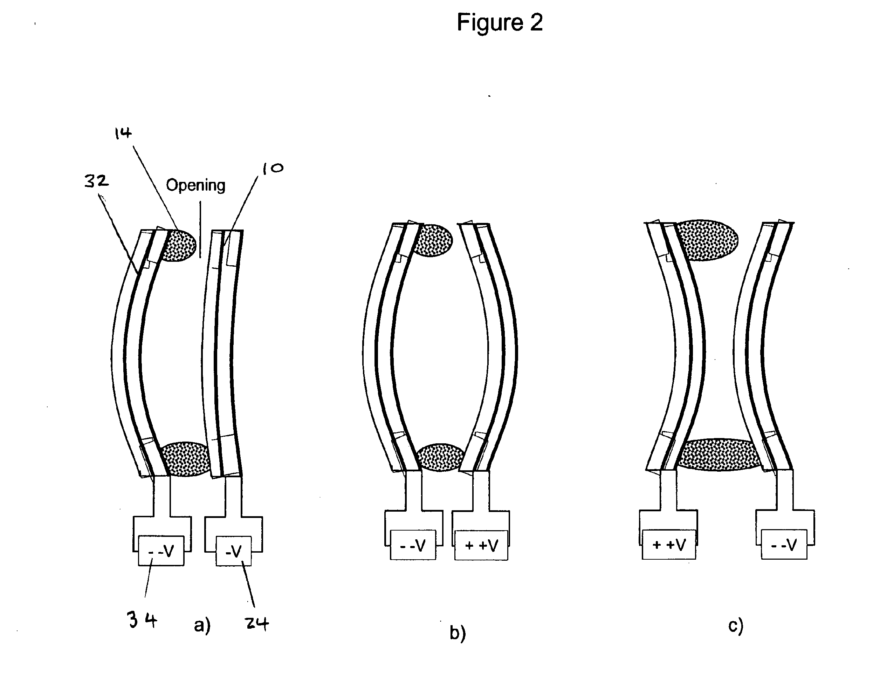

In a further embodiment shown in Figure 2, the passive window 12 is replaced by another active element 32, driven by a further voltage source 34 which is controlled to operate syndrouously and in a defined phase relationship with source 24. The lens is otherwise as described with reference to Figure1. Figure 2a shows the two active elements configured to provide a meniscus lens. Figure 2b shows the two active elements configured to provide a bi-convex lens and Figure 2c shows the two elements configured to provide a bi-concave lens. As illustrated, the degree of curvature of the active element depends on the voltage applied across it.

Compared to the highly flexible membranes used to contain the liquid in conventional fluidic lenses, the active elements 10, 32 are relatively stiff and do not deform significantly except under the influence of an applied voltage. Thus the embodiments so far disclosed can remove the risk of gravitational sag associated with fluidic lenses made with highly flexible membranes.

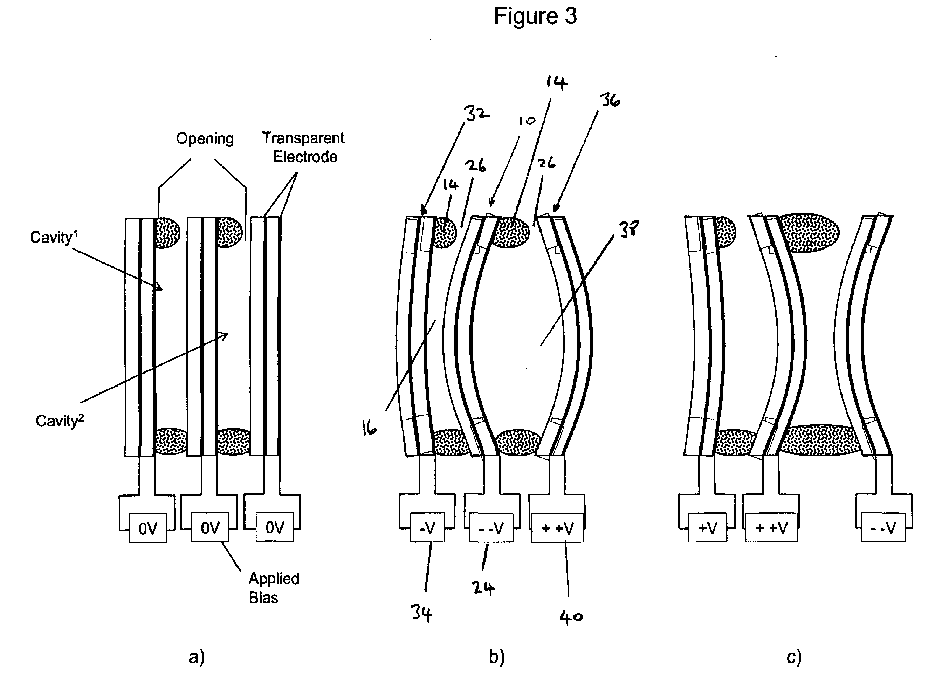

Figure 3 shows an embodiment with a third active element 36 which together with element 10 defines a second liquid-filled cavity 38, the element 10 being common to cavities 16 and 38. This arrangement enables an achromatic lens with a variable focal length to be realised. Figure 3a shows the lens when inactive with no applied voltages. The fluid in cavity 36 has a low refractive index (similar to that of a 'crown' glass), while the fluid in cavity 16 has a high refractive index (similar to that of a 'flint' glass). The low refractive index liquid can be water (refractive index = 1.33), although other refractive index matching liquids are available. This is lower than the lowest crown glass available and potentially gives the liquid achromat an advantage over glass equivalents. High refractive index matching liquids are available, from a number of commercial sources, although those with the very highest index may be toxic. Each of the active elements 10,32, 38 are as described with reference to figure 1, and each is driven by respective voltage sources 24, 24, 40 which operate in defined phase relationships with each other.

By modifying the curvature on all three active elements together, the focal length of the lens can be altered while maintaining its achromatic properties.

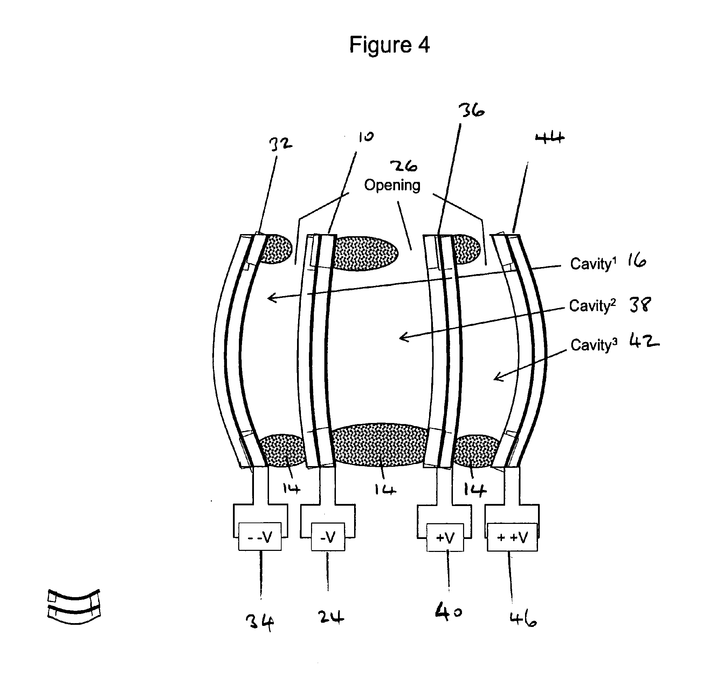

Adding a fourth active element enables more complex lenses to be realised. Figure 4 shows an embodiment for a Stenheil achromatic triplet haing liquid filled cavities 16, 38, 42 defined between active elements 32, 10, 36 and 44 which are driven by commonly-controlled voltage sources 34, 24, 40, 146. In this case the fluid in cavity 38 is of low refractive index (equivalent to 'crown' glass), while the fluid in the outer two cavities 16, 42 will be of a high index type (equivalent to a 'flint' glass).

While the embodiments discussed so far can be achieved with single, continuous ITO electrodes, it may be desirable to divide the electrode structure on one side of the active element into separately controllable segments to enable more complex shapes to be realised. The electrode on the other side will remain common to all segments.

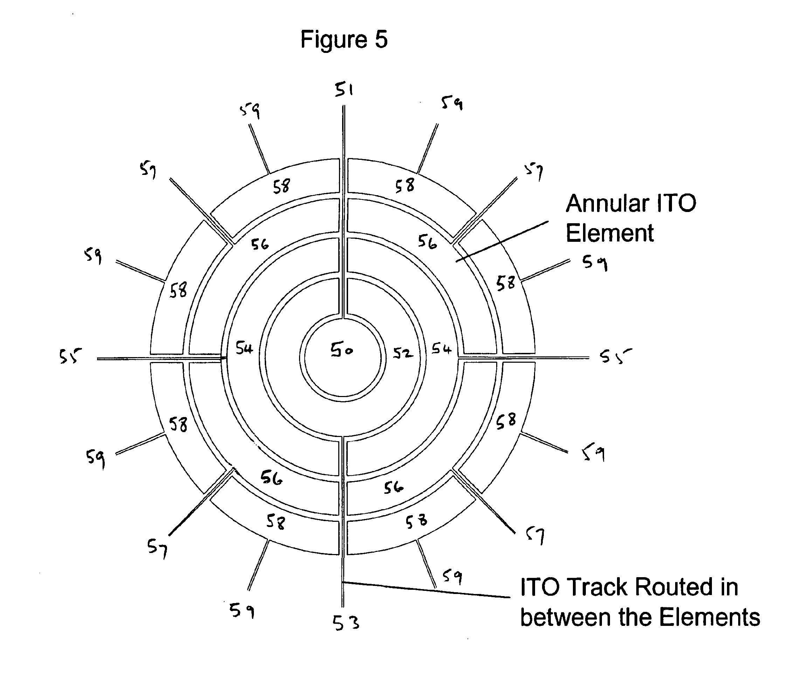

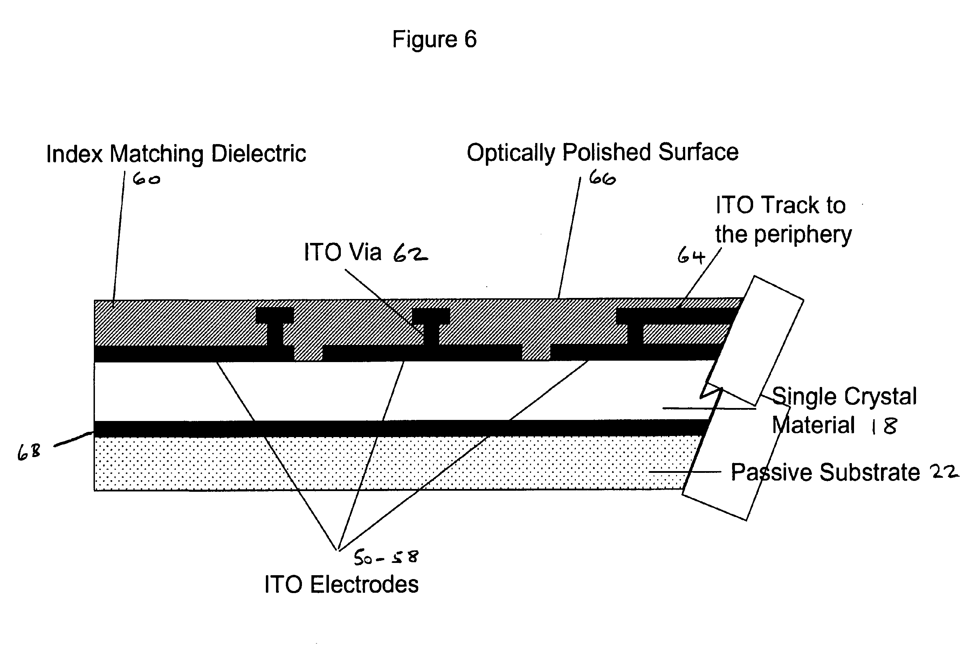

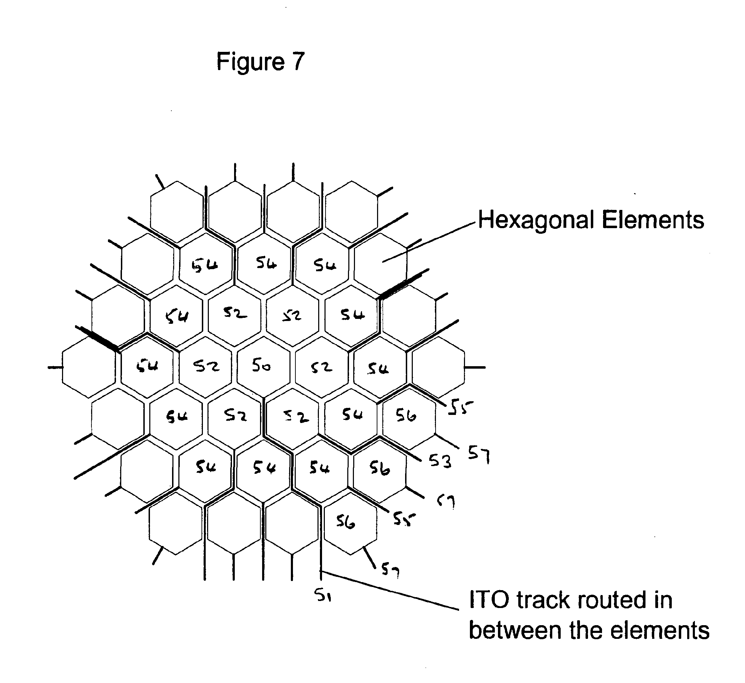

Two example patterns are given in Figures 5 and 7. Figure 5 shows a concentric electrode pattern arranged in five bands 50, 52, 54, 56, 58 fed respectively by tracks 51, 53, 55, 57, 59. All bands except the innermost one 50 are interrupted to permit the passage of the tracks to the inner bands. By applying appropriate voltage levels to each band, it is possible to generate a more aspheric shaped lens. If more bands are added, a more accurate and complex aspheric shape can be realised. Each annular band can also be segmented further to increase the complexity of the possible shapes available. However the larger the number of individual electrodes, the larger the surface area within the optical aperture that will be taken up with tracking. Although the electrode material is transparent, nevertheless this will have the net effect of reducing the efficiency of the active element. A way of ameliorating this problem may be to include a transparent insulating dielectric layer 60 over the top of the electrode pattern as shown in Figure 6. Vias 62 through the dielectric can then be used to connect an individual ITO track 64 running from the periphery to one of the electrodes 50-58. It will be particularly beneficial for the refractive index of the dielectric to match that of the ITO. By adding a further layer of the dielectric 60 over the ITO tracks and polishing the resultant surface 66 flat ("planarising" it), the active element will look uniform and featureless to the incoming light. The common electrode 68 is similarly embedded in the passive substrate 22, the rear face of which also is planarised so as to be optically flat the planarisation process as used in the manufacture of active matrix backplanes for displays may be utilised to realise the embodiment of Figure 6. Alternatively the electrode may be deposited on the surface of the substrate 22 as a continuous conformal layer. Then planarisation may not be necessary.

A further electrode structure is shown in Figure 7, in which hexagonal electrodes are arranged in a close-packed pattern. Again, while the figure shows tracks routed through the electrode structure to the periphery of the element, a planarisation process could be implemented as in Figure 6 to enable more efficient connection and to render the element optically uniform. The hexagonal elements can be actuated in concentric bands, and some of them and their associated feeds have been numbered correspondingly to Figure 6 to illustrate this.

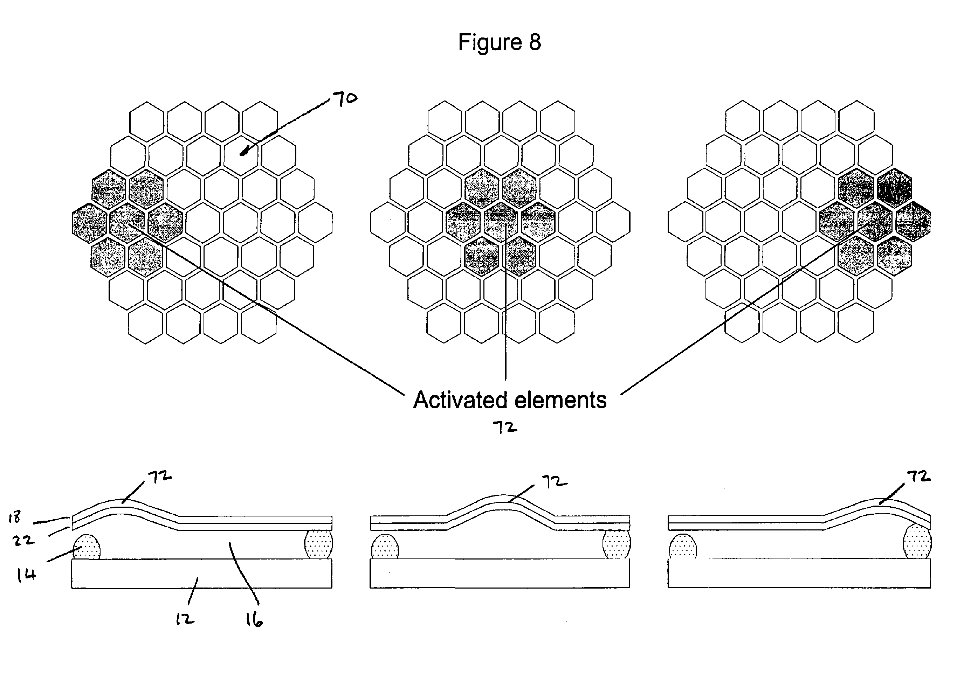

The electrode pattern of Figure 7 is well suited for the implementation of a fluidic lens as a programmable lens element. As can be seen from Figure 8, a hexagonal electrode structure 70 can be addressed selectively to provide a localised area 72 with higher focusing power which can be moved across the activated element. This capability is particularly of benefit where visibility of a wide field is required.

The multi-element device can also be used as an active optic to correct for static aberrations, for instance, in an assembled system. An iterative algorithm can be used in conjunction with a fitness parameter to adjust the programmable lens element to provide an optimised shape. The fitness parameter could be as simple as a pinhole; in this case the iterative search algorithm would be used to maximise the optical power reaching a power meter placed directly behind the pinhole. In another example, if the optical assembly is required to deliver a collimated beam with a flat wavefront, a feedback control loop could use the information from a wavefront sensor to determine the optimum correction required.

Lenses according to the invention can also be used for eyesight correction. Simple fluid lenses are already targeted at this application, but the programmable embodiments of this invention will enable more complex conditions to be corrected.

For such 'active optic' applications, once the optimum lens shape has been determined, it may be useful to fix that shape permanently. In this instance, there are a number of options that could be used. These include:
- Using as the liquid in the lens cavity a low viscosity two part epoxy which has a suitable working life (e.g. greater than thirty minutes). The correct voltages would be applied while the epoxy is setting.
- Using as the liquid a low viscosity UV curing epoxy: this can be set instantly once the optimum shape has been achieved. There are a wide range of epoxies available with a range of viscosities and a range of refractive indexes.

The ability to set the shape (especially a complex one) during manufacture in general is of benefit. A specific prescription can be catered for without incurring non-recoverable engineering costs.

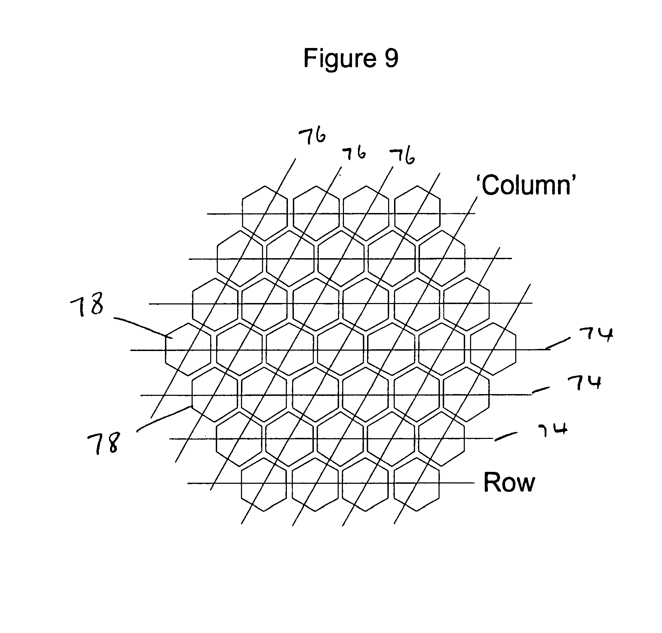

Another use for a fluidic lens according to the invention is as a programmable phase plate for adaptive optics. For this application the device would typically be used in transmission and a wavefront sensor would be used to provide feedback to a control interface. These systems can either be used with open loop control (where the information from the wavefront sensor is analysed to determine the required voltages to apply to the wavefront corrector) or in closed loop control. One example is where the wavefront sensor is placed after the wavefront corrector, and the closed loop is used to minimise the spot (local) deviation on the wavefront sensor. The wavefront coming off the corrector then will have been flattened. Astronomy applications often require high order correctors with up to thousands of elements. For these numbers of electrodes, passive addressing is no longer viable. In this instance it may be possible to use a transparent active matrix to address the lens elements. This technology is currently undergoing development for transparent OLED (organic light emitting diode) displays as described in W. Kowalsky et al, 'See-through OLED Displays'. SPIE Vol 6486, 64860F-1. In a hexagonal active matrix, shown in Figure 9, valid information for a specific 'row' 74 is loaded onto the 'columns' 76 through a shift register. Once all the information is loaded, the 'row' is then enabled and respective transparent transistors at each electrode 78 hold the information until that 'row' is addressed again.

The multi-element fluid lens as disclosed may also enable other types of achromatic lens to be realised. For instance, it will be possible to realise an achromatic meniscus lens or an achromatic aspheric lens as long as the curvatures required are within the capabilities of the active elements used.

In selecting a suitable liquid for use in a fluidic lens, besides having high optical transmission over the required range of wavelengths, various other criteria should be considered. For example, the liquid should have low viscosity to enhance its dynamic behaviour, remain in the liquid state throughout a required operational temperature range (unless it is to be solidified after shaping e.g. as for the epoxy versions discussed above), be chemically insert and stable and have a high refractive index to enhance optical power at a given lens surface curvature. Furthermore, preferred substances should not be toxic, nor exhibit absorption bands in the wavelength region of interest.

While most of the discussion has been centred on operation with visible light, the single crystal piezoelectric element will also enable operation in the near infra-red and the 3-5µm range. A list of the desirable properties for a liquid suited to use with an IR fluidic lens has been presented in our GB Patent Application No GB 0814933.8 (unpublished at the date of filing of this application) the disclosure of which is incorporated herein by reference. Those liquids found to be suitable include certain fluorocarbon compounds, in particular C₆F₁₀(CF₃)₂ (Perfluoro-1,3-dimethylcyclohexane), C₁₀F₁₈ (Perfluorodecaline) and CF₃(CF₂)₆CF₃ (Perfluorooctane). Each of these compounds has been selected in particular for its high level of transmission of light of wavelengths in the 3-5µm range. These compounds are also highly stable, inert, hydrophobic and non-toxic (finding use in many medical applications), although their refractive index is relatively low.

The refractive index of ITO is fairly high and may be a good match to that of the single crystal piezoelectric material in the 1µm region. This offers the possibility of depositing a λ/4 thick coating (e.g. 250nm) of the ITO to act as both a transparent conductor and as an anti-reflection coating. While the transmission of ITO is low in the 3-5µm range, operation will still be possible by using a thinner, more resistive coating. Because the capacitance of the piezoelectric element will be low (e.g. order of ∼40nF for a 20mm diameter element), the sheet resistance of the ITO could be as high as 1000ohms/square before the RC time constant starts to approach the response speed determined by the mechanical properties of the lens assembly such as the fluid viscosity and the thickness of the active element.

Preferably, when filling the cavity with the liquid, a second small aperture is used for the filling procedure; one aperture is used to feed the liquid into the main cavity whilst the other aperture acts as a bleed (air outlet) and reduces the risk of air being trapped in the system.

The fluidic lenses of the present invention may be used in association with a lens of fixed focal length such that the fluidic lens provides auxiliary focus control for the fixed lens. In addition, two or more fluidic lenses may be used together to provide a compound lens assembly. One of the fluidic lenses may be of the membrane type disclosed in GB 0814933.8.

It will be appreciated that various alterations, modifications, and/or additions may be introduced into the constructions and arrangements of parts described above without departing from the scope of the present invention as defined in the appended claims.

## Claims

1. A fluidic lens comprising a cavity containing an optically transparent liquid and bounded by optically transparent walls arranged such that light may pass into the fluid via one said wall and exit from the fluid via another said wall, at least one said wall comprising at least one optically transparent piezoelectric element which is deformable so as to change the shape of the cavity, and **characterised in that** the at least one optically transparent piezoelectric element is a single crystal piezoelectric element.

2. A lens as in claim 1 comprising at least one optically transparent electrode for applying an actuating voltage to a said piezoelectric element.

3. A lens as in claim 2 wherein the electrode is disposed in an optically transparent planarisation layer.

4. A lens as in claim 3 wherein the material of the planarisation layer has substantially the same refractive index as that of the electrode.

5. A lens as in any preceding claim comprising a plurality of electrodes arranged at the surface of the piezoelectric element to apply actuating voltages to different areas of the piezoelectric element.

6. A lens as in claim 5 wherein the electrodes form an array such that each said area of the piezoelectric element has individually addressable electrodes.

7. A lens as in any preceding claim wherein the liquid is conductive and forms an electrode for the piezoelectric element.

8. A lens as in any preceding claim wherein the piezoelectric element is configured to provide a plurality of individually-deformable sub-elements.

9. A lens as in claim 8 comprising a supporting structure which supports the piezoelectric element at nodes between the sub-elements.

10. A lens as claimed in any preceding claim, the lens further comprising an opening to permit liquid to flow into or out of the cavity when the piezoelectric element is deformed

11. A lens as in claim 1 comprising means for maintaining the liquid under pressure.

12. A lens as in claim 1 or 11 comprising a pump configured to be driven simultaneously with deformation of the at least one piezoelectric element to assist the flow of liquid:

13. A lens as in claim 12 wherein the pump is a piezoelectric pump.

14. A compound lens comprising a plurality of lenses as in any preceding claim, a said wall of one lens also forming a said wall of another lens, thereby enabling an achromatic lens with a variable focal length to be realised

## Patentansprüche

1. Fluidlinse, die einen Hohlraum umfasst, der eine optisch transparente Flüssigkeit enthält und durch optische transparente Wände begrenzt ist, die derart ausgelegt sind, dass Licht über die eine Wand in das Fluid eintreten und das Fluid über die andere Wand verlassen kann, wobei die mindestens eine Wand mindestens ein optisch transparentes piezoelektrisches Element umfasst, das verformt werden kann, um die Gestalt des Hohlraums zu ändern, und **dadurch gekennzeichnet, dass** das mindestens eine optisch transparente piezoelektrische Element ein einkristallines piezoelektrisches Element ist.

2. Linse nach Anspruch 1, umfassend mindestens eine optisch transparente Elektrode zum Anlegen einer Betätigungsspannung an ein piezoelektrisches Element.

3. Linse nach Anspruch 2, wobei die Elektrode in einer optisch transparenten Planarisierungsschicht angeordnet ist.

4. Linse nach Anspruch 3, wobei das Material der Planarisierungsschicht im Wesentlichen den gleichen Brechungsindex wie die Elektrode aufweist.

5. Linse nach einem vorhergehenden Anspruch, umfassend mehrere an der Oberfläche des piezoelektrischen Elements angeordnete Elektroden zum Anlegen von Betätigungsspannungen an verschiedene Bereiche des piezoelektrischen Elements.

6. Linse nach Anspruch 5, wobei die Elektroden ein Array ausbilden, so dass jeder Bereich des piezoelektrischen Elements individuell adressierbare Elektroden aufweist.

7. Linse nach einem vorhergehenden Anspruch, wobei die Flüssigkeit leitend ist und eine Elektrode für das piezoelektrische Element bildet.

8. Linse nach einem vorhergehenden Anspruch, wobei das piezoelektrische Element konfiguriert ist zum Bereitstellen mehrerer individuell verformbarer Teilelemente.

9. Linse nach Anspruch 8, umfassend eine Stützstruktur, die das piezoelektrische Element an Knoten zwischen den Teilelementen stützt.

10. Linse nach einem vorhergehenden Anspruch, wobei die Linse weiterhin eine Öffnung umfasst, damit Flüssigkeit in den Hohlraum hinein und aus diesem heraus strömen kann, wenn das piezoelektrische Element verformt ist.

11. Linse nach Anspruch 1, umfassend Mittel zum Halten der Flüssigkeit unter Druck.

12. Linse nach Anspruch 1 oder 11, umfassend eine Pumpe, die konfiguriert ist, simultan mit einer Verformung des mindestens einen piezoelektrischen Elements angesteuert zu werden, um den Flüssigkeitsstrom zu unterstützen.

13. Linse nach Anspruch 12, wobei die Pumpe eine piezoelektrische Pumpe ist.

14. Verbundlinse, umfassend mehrere Linsen nach einem vorhergehenden Anspruch, wobei die Wand einer Linse auch eine Wand einer anderen Linse bildet, wodurch eine achromatische Linse mit einer variablen Brennweite realisiert werden kann.

## Revendications

1. Lentille fluidique comportant une cavité contenant un liquide optiquement transparent et délimitée par des parois optiquement transparentes agencées de telle façon qu'une lumière puisse pénétrer dans le fluide via une desdites parois et quitter le fluide via une autre desdites parois, au moins une desdites parois comportant au moins un élément piézoélectrique optiquement transparent qui est déformable de manière à modifier la forme de la cavité, et **caractérisée en ce que** le ou les éléments piézoélectriques optiquement transparents sont des éléments piézoélectriques monocristallins.

2. Lentille selon la revendication 1, comportant au moins une électrode optiquement transparente servant à appliquer une tension d'actionnement à un desdits éléments piézoélectriques.

3. Lentille selon la revendication 2, l'électrode étant disposée dans une couche optiquement transparente de planarisation.

4. Lentille selon la revendication 3, le matériau de la couche de planarisation présentant sensiblement le même indice de réfraction que celui de l'électrode.

5. Lentille selon l'une quelconque des revendications précédentes, comportant une pluralité d'électrodes agencées à la surface de l'élément piézoélectrique pour appliquer des tensions d'actionnement à différentes zones de l'élément piézoélectrique.

6. Lentille selon la revendication 5, les électrodes formant un réseau de telle façon que chacune desdites zones de l'élément piézoélectrique soit dotée d'électrodes adressables individuellement.

7. Lentille selon l'une quelconque des revendications précédentes, le liquide étant conducteur et formant une électrode pour l'élément piézoélectrique.

8. Lentille selon l'une quelconque des revendications précédentes, l'élément piézoélectrique étant configuré pour présenter une pluralité de sous-éléments individuellement déformables.

9. Lentille selon la revendication 8, comportant une structure porteuse qui soutient l'élément piézoélectrique au niveau de noeuds entre les sous-éléments.

10. Lentille selon l'une quelconque des revendications précédentes, la lentille comportant en outre une ouverture pour permettre à du liquide d'entrer dans ou de sortir de la cavité lorsque l'élément piézoélectrique est déformé.

11. Lentille selon la revendication 1, comportant un moyen servant à maintenir le liquide sous pression.

12. Lentille selon la revendication 1 ou 11, comportant une pompe configurée pour être actionnée simultanément à une déformation du ou des éléments piézoélectriques afin de contribuer à l'écoulement du liquide.

13. Lentille selon la revendication 12, la pompe étant une pompe piézoélectrique.

14. Lentille composée comportant une pluralité de lentilles selon l'une quelconque des revendications précédentes, une desdites parois de l'une des lentilles formant également une desdites parois d'une autre lentille, permettant ainsi de réaliser une lentille achromatique de longueur focale variable.
